# EUROPEAN PATENT SPECIFICATION

(11) **EP 2 181 610 B1**
(45) Date of publication and mention of the grant of the patent: **05.09.2012**
(21) Application number: 10154329.6
(22) Date of filing: 07.02.2007
(51) Int. Cl.: A23L 1/29, A23L 1/30, A23L 1/212

(54) **Sensoric imprinting**
Sensorische Prägung
Marque sensorielle

(30) Priority: 07.02.2006 EP 06101381
(43) Date of publication of application: 05.05.2010
(62) Divisional of application: 07715867.3
(73) Proprietor: N.V. Nutricia, 2712 HM Zoetermeer (NL)
(72) Inventor: Alles, Martine Sandra, 7328 NH Apeldoorn (NL)
(74) Representative: Swinkels, Bart Willem

(56) References cited:
- DE-A1- 3 737 442
- US-A- 6 051 235
- US-A1- 2003 180 393
- DATABASE WPI Section Ch, Week 200345 Thomson Scientific, London, GB; Class D13, AN 2003-478589 XP002374729 & RU 2 204 916 C1 (UNIV KUBAN TECHN) 27 May 2003 (2003-05-27)
- DATABASE WPI Section Ch, Week 200258 Thomson Scientific, London, GB; Class D13, AN 2002-539186 XP002374730 & CN 1 184 614 A (HU J) 17 June 1998 (1998-06-17)

## Description

### FIELD OF THE INVENTION

The present invention is in the field of good health and concerns stimulating the consumption of plant material such as vegetables and fruit. In particular a kit of parts is provided with food products that are suitable for administration to an infant that serves the purpose of stimulating the consumption of e.g. vegetables and fruit later in life.

### BACKGROUND OF THE INVENTION

The ingestion of fruits and vegetables is very important for humans to maintain good health. Authorities and health organizations have repeatedly pointed to the importance of ingesting sufficient fruits and vegetables in an attempt to prevent diseases such as obesity, cancer and cardiovascular diseases from occurring. Despite all the effort, fruit and vegetable consumption is not increasing and diseases like obesity and diabetes are taking epidemic forms.

US2005/0095324 discloses a ready-to-eat pre-packaged food for feeding infants or babies, in the form of a multi-component meal of a pasty or congealable consistency. This meal includes at least two components that can be visually differentiated, are unmixed and occupy at least two different volume segments of a product container or shape, and delimiting boundaries between the at least two components in the form of essentially vertical interfaces that are visible from above the container or shape as contours or boundary lines. The food aims to allow the individual constituents of the meal to be combined in a novel fashion, thus making it possible during the feeding process to better recognize taste-related preferences and at the same time to make that process a visually interesting event for the infant or baby being fed.

US 6 051 235 discloses baby-food compositions containing ginger which can be used in reducing gastroesophageal reflux in infants. The compositions can contain a ginger puree and one or more fruits or vegetables.

It is an object of the present invention to provide means and methods that contribute to good health of subjects. In particular it is an object to provide means and methods that result in a reduced chance to develop diseases such as obesity and diabetes. More in particular the present invention aims to stimulate the consumption of vegetables and fruit, thereby resulting in a reduced chance to develop diseases such as obesity and diabetes.

### SUMMARY OF THE INVENTION

Subject of the present invention is that when infants are exposed to discrete amounts of plant materials of different tastes, the acquirement of a dislike of taste for different plant materials can be avoided. In fact the acceptance or liking of the taste of different plant materials and/or the consumption of different plant materials later in life can be stimulated or improved when infants are exposed to discrete amounts of plant materials of different tastes. The exposure, e.g. administering or feeding, of infants to different plant materials, particularly from vegetable or fruit, results in the sensoric imprinting of the different tastes. Children and adults having been subjected to this process of sensoric imprinting when they were young, ingest more fruits and vegetables, resulting in an improved health. Due to the healthier lifestyle, "junk food" related diseases such as obesity and diabetes are prevented. Furthermore, the present method results in an increased intake of fibers and/or iron, while keeping caloric intake relatively low. Insufficient intake of iron and fiber is a problem for many infants.

Infants are preferably subjected to the sensoric imprinting described above as early as possible, preferably before the infant reaches the age of 2, as the effect is than believed to be optimal. This results in some restrictions concerning the characteristics of the plant material to be administered, i.e. these should be in a form suitable for administration to the infant. The present food compositions are therefore preferably a plant puree or juice, which is suitable for ingestion by infants or an infant formula which has been fortified with plant material.

When provided as puree type foodstuff it is preferred that the volume to be administered to the infant is relatively small, as the exposure to different tastes preferably has a limited interference with the normal feeding pattern and ingestion of large volumes may result in adverse effects such as development of dislike for the taste. Also, in order to establish a sufficient sensoric imprinting effect discrete amounts of different plant materials of different tastes are preferably administered.

The acceptance or liking of the taste of different plant materials and/or the consumption of different plant materials later in life can also be stimulated or improved when infants are exposed to different tastes of plant materials in combination with the intake of infant formula, in particular dry infant formula. A variety of discrete portions of powdered infant nutrition comprising different plant materials can be used. Preferably the only difference between the infant formulas in the present invention is the plant material, while the other nutritional ingredients remain the same. Such a dry infant formula can be bottle fed to the infant after admixing with an aqueous liquid. The different plant materials in these nutritional compositions stimulate the sensoric imprinting.

Thus the present invention provides the means for sensoric imprinting resulting and contributing to good health of a subject in the form of a kit of parts as defined in claim 1. Also a method for sensoric imprinting is provided, as defined in claim 3.

### DETAILED DESCRIPTION OF THE PREFFERED EMBODIMENT

### Kit of parts

The present invention provides a "kit of parts" comprising a plurality of containers. The container is preferably in the form of a can, cup, jar, sachet or the like. Each container preferably comprises one portion of food product. The containers typically have a capacity of between 2 and 100 ml, or between 2 and 100 g, preferably a capacity of 2 to 50 ml, or 2 to 50 g. The containers are preferably constructed so to ensure hygienic protection against contamination and spoilage, e.g. dust, dirt and bacteria. The containers are suitably made from plastic, paper and/or aluminium, preferably in the form of a cup, with a sealed lid, wherein said lid can preferably be peeled-off. The containers are preferably provided as a kit of parts by being enclosed in a single packaging (e.g. carton, box, net or foil) and/or (mutually) interconnected by means of connecting portion(s) which are preferably breakable. The lids are preferably removable from each container individually, preferably by tearing. In one preferred embodiment, the kit of parts is a box with at least 7 sachets, wherein each sachet contains a portion food product.

The kit preferably comprises 4 to 50 containers, more preferably 4 to 25 containers. The kit comprises at least 4 containers with one portion food product, more preferably at least 8 containers with one portion food product.

A (one) portion is

2 to 50 gram dry infant nutrition, preferably powdered infant formula.

The present kit comprises a container with one portion food product A (FP-A), and a container with one portion food product B (FP-B), a container with one portion food product C (FP-C) and a container with one portion food product D (FP-D), more preferably also a container with one portion food product E (FP-E). FP-A, FP-B, FP-C, FP-D and FP-E are typically in separate containers. FP-A, FP-B, FP-C, FP-D and FP-E have different tastes, in particular each of FP-A, FP-B, FP-C, FP-D and FP-E comprises a plant material from a plant species other than the plant species that is used for the manufacture of each of the other food products. Optionally the kit of parts comprises a further food product F and optionally a further food product G and optionally a further food product H and optionally a further food product I and optionally a further food product J and optionally a further food product K. Also food products F, G, H, I and J have different tastes, in particular each of food products F, G, H, I and J comprises a plant material from a plant species other than the plant species that is used for the manufacture of each other of the food products A, B, C, D, E, F, G, H, I and J. In fact for the purpose of this invention there is no limit to the maximum number of different food products in the kit of parts according to the invention. The kit of parts according to the invention comprises not more than 100 containers. The kit of parts comprises 4-100, e.g. 4, 5, 6, 7, 8, 9, 10, 11, 12, 13, 14, 15, 16, 17, 18, 19, 20....98, 99, 100, different food products of different taste, in particular different food products comprise a plant material from a plant species other than the plant species that is used for the manufacture of each other different food product.

### Food product: infant nutrition-type

In a further preferred embodiment the present invention relates to the administration of infant formula with plant material admixed to the infant formula. In this way no separate feeding has to take place, while ensuring exposure to multiple plant material tastes. The containers of the present kit advantageously comprise a portion of food product, wherein the portion is 2 to 50 gram dry infant nutrition. The dry infant nutrition is preferably selected from the group consisting of a powdered infant formula, powdered cereal, infant formula in tablet form and a powdered plant material suitable for admixing to infant formula; most preferably a powdered infant formula is used. An embodiment where concentrated infant formula is used, which is subsequently diluter to liquid infant formula with a volume of 150 to 250 ml is also within the scope of this invention.

Preferably the kit of parts contains at least 7 containers with one portion infant formula, preferably at least 10 containers with one portion infant formula, more preferably at least 15 containers with one portion infant formula.

When the food products in the kit are infant formula, infant cereal or infant formula in tablet form, the difference between the different food compositions is preferably the plant material(s) used for the sensoric imprinting effect. Preferably the present kit contains different infant formula. Hence preferably FP-A and FP-B, FP-C, FP-D, and preferably FP-E and FP-F are infant nutrition which can provide complete nutrition to the infant. Preferably the present food products are infant formula to which different plant materials are admixed. The present food compositions (infant formula) preferably comprise between 5 and 60 en% lipid, between 5 and 40 en% protein and between 15 and 90 en% carbohydrate, more preferably between 10 and 60 en% lipid, between 5 and 40 en% protein and between 25 and 75 en% carbohydrate. (en% is short for energy percentage and represents the relative amount each constituent contributes to the total caloric value of the preparation). When administered to the infant the food composition preferably has an osmolality between 50 and 500 mOsm/kg, more preferably between 100 and 400 mOsm/kg. The caloric density is preferably between 0.1 and 2.5 kcal/ml, even more preferably a caloric density of between 0.5 and 1.5 kcal/ml, most preferably between 0.6 and 0.8 kcal/ml. The viscosity is preferably between 1 and 25 mPas at a shear rate of 100 per second and 20°C.

### Method

The present sensoric imprinting method can be realized by administration of food compositions as an infant formula. The following compositions are preferably administered to the infant, and hereinafter referred to as "serving":
150 to 250 ml infant nutrition, preferably infant formula.

The present method relates to the administration of at least one serving FP-A and at least one serving FP-B, at least one serving FP-C and at least one serving FP-D. The method relates to the sequential administration of FP-A and FP-B, followed by the administration of FP-C, and followed by administration of FP-D.

The present invention is particularly suitable for sensoric imprinting of different tastes. The present invention also provides a method for stimulating an increased consumption of healthy plant material such as vegetables and fruit later in life. The present invention also provides a method for increasing familiarization with multiple plant tastes. The present method particularly aims to reduce the occurrence of diseases later in life. Hence, the present invention also provides a method for the prevention and/or treatment of obesity, diabetes, atherosclerosis, hypertension, cardiovascular diseases, high blood pressure, cancer, iron deficiency anemia and constipation, particularly the prevention of the abovementioned diseases.

The present method comprising the steps of: step a: administering to the infant one serving FP-A; followed by step b: administering to the infant one serving FP-B; wherein FP-A comprises a plant material and FP-B comprises a plant material from a plant species other than the plant species used for the manufacture of FP-A. Step b. is followed by step c: administering to the infant one serving food product C (FP-C), wherein FP-C comprises a plant material from a plant species other than the plant species used for the manufacture of FP-A and other than a plant species used for the manufacture of FP-B. The present method also comprises a step d: administering to the infant one serving food product D (FP-D), wherein FP-D comprises a plant material from a plant species other than the plant species used for the manufacture of FP-A, other than a plant species used for the manufacture of FP-B and other than a plant species used for the manufacture of FP-C. Optionally the present method further comprises administering to the infant one serving of a food product E (FP-E) and optionally a further food product F and optionally a further food product G and optionally a further food product H and optionally a further food product I and optionally a further food product J and optionally one or more even further food products wherein each of food products E, F, G, H, I and J one or more further food products comprise a plant material from a plant species other than the plant species that is used for the manufacture of each other of the food products A, B, C, D, E, F, G, H, I and J and one or more even further food products. Thus for example the present method encompasses the administration of the present food product in the following order, A - A - B - B - C - C - D - D.

Repeated exposure such as more than one exposure during the day enhances the sensoric imprinting effect. Hence, in the present method, the infant preferably is administered 1, 2 or 3 of the present food compositions per day. These may be food compositions with different or the same composition. In one embodiment at least two different food compositions are administered to the infant per day, or alternatively at least three.

For optimal sensoric imprinting, the present FP-A and FP-B, are preferably administered with an interval of between 1 and 24 hours, optionally with an interval between 1 and 14 hours, yet in another option with an interval between 1 to 8 hours. Preferably the variety of tastes offered to the infant is relatively high. Hence, preferably at most 5 identical food products are administered sequentially, preferably at most 2. Preferably FP-B is administered to the infant within 24 hours after administration of FP-A, optionally within 12 hours. Alternatively FP-B is administered to the infant at least 1 hour after administration of FP-A, preferably at least 3 hours.

The present method comprises the administration of at least 4 different food products, more preferably at least 5, 6, 7, 8, 9, 10, 11, 12 etc. and preferably at most 20. In the present method, preferably between 4 and 100, more preferably between 4 and 25 food products are administered to the infant.

The present method and kit of parts can also be used in a method for the detection of allergies against fruits and vegetables. For this embodiment it may be beneficial to have a kit of parts that comprises at least 2 containers with food product A, preferably at least 3 or alternatively at least 4 containers with food product A. Optionally the kit of parts also comprises at least 2 containers with food product B, preferably at least 3 or alternatively at least 4 containers with food product B. In further embodiments 2, 3 or 4 containers comprising food product C and/or 2, 3 or 4 containers comprising food product D etc mey be comprised in the kit of parts. It may be advantageous to vary the amounts of food products A and B and optionally further food products C and/or D etc. in the containers , e.g one container with 5 or 10 ml, a second with 10 or 20 ml a third with 15 or 30 ml and a fourth with 20 or 40 ml comprising the same food product. In the method of exposing an infant to a food product it is preferred to administer the same food product on sequential days, preferably in an increasing amount of the food product.

The present method is preferably used by infant having an age below 2 years, preferably between 3 and 18 months, even more preferably between 4 and 10 months. The food products are therefore preferably suitable for administration to an infant having an age between 4 and 10 months.

### Different food products

The present invention provides the administration of a plurality of food products and a kit comprising a plurality of food products. Food product A (FP-A) comprises a plant material. Food product B (FP-B) comprises a plant material from a plant species other than the plant species used for the manufacture of FP-A, e.g. FP-A comprises pea puree and FP-B comprises carrot puree. Food product C (FP-C) comprises a plant material from a plant species other than the plant species used for the manufacture of FP-A and other than a plant species used for the manufacture of FP-B. Food product D (FP-D) comprises a plant material from a plant species other than the plant species used for the manufacture of FP-A, other than a plant species used for the manufacture of FP-B and other than a plant species used for the manufacture of FP-C. In further embodiments one or more further food products are comprised in the kit of parts, said one or more further food products comprising a plant material from a plant species other than the plant species used for the manufacture of the other food products. Thus FP-A, FP-B, FP-C and FP-D, and optionally FP-E and FP-F etc. comprise plant material from different plant species, preferably from different vegetables, e.g. FP-A comprises carrot puree, FP-B comprises cauliflower puree, FP-C comprises broccoli puree and FP-D comprises pumpkin puree, etc In another example FP-A, FP-B, FP-C and FP-D consist of a base infant fomula (e.g. Nutrilon standard, Nutricia, Netherlands) to which 100 mg different plant materials is admixed per 200 ml ready to drink formula.

Preferably the present method comprises the administration of at least three different food products comprising different vegetable plant material (preferably vegetable purees), more preferably at least 4 different food products comprising different vegetable plant material , and most preferably 5 to 15 different food products comprising different vegetable plant material . In a further preferred embodiment, the present kit comprises at least 3 different food products comprising fruit plant material (preferably fruit purees), more preferably at least 4 different fruit plant materials , most preferably 5-15 different fruit plant materials . The sensoric imprinting of fruit tastes and vegetable tastes can take place on the same day,

FP-A preferably comprises a plant material from a vegetable selected from the group consisting of pea, corn, cabbage, courgette, carrot, spinach, endive, leek, red beet, butter bean, green bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom.

Preferably FP-B also comprises a vegetable plant material selected from this group, but other than the plant species used for the manufacture of FP-A. Preferably FP-C also comprises a vegetable plant material selected from this group, but other than the plant species used for the manufacture of FP-A and other than the plant species used for the manufacture of FP-B. Preferably FP-D comprises a vegetable plant material selected from the abovementioned group, but from a plant species other than the vegetable plant species used for the manufacture of FP-A, other than a plant species used for the manufacture of FP-B and other than a plant species used for the manufacture of FP-C.

Optionally further food products E, F, G, H, I and J and even further food products comprise a vegetable plant material selected from the abovementioned group, but from a plant species other than the vegetable plant species used for the manufacture of the other food products.

In a further preferred embodiment FP-A comprises a fruit selected from the group consisting of strawberry, banana, blueberry, apricot, pineapple, apple, orange, tangerine, mandarin, cherry, peach, grapefruit, melon, plum, pear, rose-hip, kiwi, red berry, grape, lemon, papaya, raspberry, avocado, cranberry, lychee, lime and nectarine.

Preferably FP-B also comprises a fruit selected from this group, wherein a fruit used for the manufacture of FP-B is different from a fruit used for the manufacture of FP-A. Preferably FP-C also comprises a fruit selected from this group, wherein a fruit used for the manufacture of FP-C is different from a fruit used for the manufacture of FP-A and FP-B. Preferably FP-D also comprises a fruit selected from this group, wherein a fruit used for the manufacture of FP-D is different from a fruit used for the manufacture of FP-A, FP-B and FP-C. Optionally further food products E, F, G, H, I and J and even further food products comprise a vegetable plant material selected from the abovementioned group, but from a plant species other than the vegetable plant species used for the manufacture of the other food products

The FP-A, FP-B FP-C and/or FP-D etc. preferably have been subjected to a heat treatment. Heat treatment reduces microbial load, and reduce microbial contamination. The kit of parts preferably comprises a) sterilized plant purees suitable for storage at room temperature; b) pasteurized or sterilized puree suitable for storage at about 4°C; or c) pasteurized, frozen plant puree. The food products are preferably administered to the infant at a temperature between 15°C and 40°C.

### EXAMPLES

### Example 1: Infant formula with plant material

Kit of parts comprising 20 sachets; 5 sachets with 32 gram powdered Nutrilon Standaard 2 (Nutricia" The Netherlands) and 100 mg carrot powder; 5 sachets with 32 gram powdered Nutrilon Standaard 2 (Nutricia, The Netherlands) and 100 mg broccoli powder; 5 sachets with 32 gram powdered Nutrilon Standaard 2 (Nutricia, The Netherlands) and 100 mg green bean powder; and 5 sachets with 32 gram powdered Nutrilon Standaard 2 (Nutricia, The Netherlands) and 100 mg tomato powder.

The kit is accompanied with instruction admix the powder with 180 ml warm water and administer the contents to the infant with the age between 6 months and 12 months, 3 times per day. It is further optionally mentioned that exposure of the infant to different tastes during the early stages of life increases the liking of a broad range of vegetables and/or stimulates consumption of vegetables later in life. Stimulation of consumption of fruit and vegetables helps reducing the occurrence of diseases such as obesity, cancer and diabetes.

## Claims

1. A kit of parts comprising 4 to 100 containers comprising food product and at least one container with one portion food product A (FP-A) and one container with one portion food product B (FP -B) and at least one container with one portion food product C (FP-C) and at least one container with one portion food product D (FP-D) wherein:
a. FP-A and FP-B and FP-C and FP-D are in a form suitable for administration to an infant after admixing with an aqueous liquid;
b. FP-A comprises a plant material;
c. FP-B comprises a plant material from a plant species other than the plant species used for the manufacture of FP-A;
d. FP-C comprising a plant material from a plant species other than a plant species used for the manufacture of FP-A and other than a plant species used for the manufacture of FP-B;
e. FP-D comprises a plant material from a plant species other than a plant species used for the manufacture of FP-A, other than a plant species used for the manufacture of FP-B and other than a plant species used for the manufacture of FP-C; and
f. one portion of food product is:
(i) 2 to 50 gram dry infant nutrition

2. The kit of parts according to claim 1, wherein FP-A, FP-B, FP-C and FP-D comprise between 5 and 60 en% lipid, between 5 and 40 en% protein and between 15 and 90 en% carbohydrate.

3. A non-therapeutic method for feeding an infant, comprising the steps of:
a. administering to the infant one portion of a food product A (FP-A); followed by
b. administering to the infant one portion of a food product B (FP-B); followed by
c..administering to the infant one portion food product C (FP-C); followed by
d. administering to the infant one portion food product D (FP-D);
wherein FP-A comprises a plant material and FP-B comprises a plant material from a plant species other than a plant species used for the manufacture of FP-A and wherein FP-C comprises a plant material from a plant species other than a plant species used for the manufacture of FP-A and other than a plant species used for the manufacture of FP-B and FP-D comprises a plant material from a plant species other than a plant species used for the manufacture of FP-A and other than a plant species used for the manufacture of FP-B and other than a plant species used for the manufacture of FP-C; and wherein FP-A, FP-B, FP-C and FP-D are infant nutrition.

4. The method according to claim 3, wherein the infant has an age below 2 years.

5. The method according to claims 3 or 4, wherein FP-A, FP-B, FP-C and FP-D comprise between 5 and 60 en% lipid, between 5 and 40 en% protein and between 15 and 90 en% carbohydrate.

6. The method according to any one of claims 3 - 5, for sensoric imprinting of different tastes.

7. The method according to any one of claims 3 - 5 for stimulating the consumption of plant material such as vegetables and fruit later in life.

8. The method according to any one of claims 3 - 5 for increasing familiarization with multiple plant tastes.

## Patentansprüche

1. Teilekit umfassend 4 bis 100 Behälter umfassend Nahrungsmittelprodukt und wenigstens einen Behälter mit einer Portion Nahrungsmittelprodukt A (FP-A) und einen Behälter mit einer Portion Nahrungsmittelprodukt B (FP-B) und wenigstens einen Behälter mit einer Portion Nahrungsmittelprodukt C (FP-C) und wenigstens einen Behälter mit einer Portion Nahrungsmittelprodukt D (FP-D), wobei:
a. FP-A und FP-B und FP-C und FP-D in einer Form vorliegen, die für die Verabreichung an einen Säugling bzw. ein Kleinkind nach dem Vermischen mit einer wässrigen Flüssigkeit geeignet ist;
b. FP-A ein Pflanzenmaterial umfasst;
c. FP-B ein Pflanzenmaterial aus einer Pflanzenart umfasst, die von der Pflanzenart, die für die Herstellung von FP-A verwendet wird, verschieden ist;
d. FP-C ein Pflanzenmaterial aus einer Pflanzenart umfasst, die von einer Pflanzenart, die für die Herstellung von FP-A verwendet wird, verschieden ist und von einer Pflanzenart, die für die Herstellung von FP-B verwendet wird, verschieden ist;
e. FP-D ein Pflanzenmaterial aus einer Pflanzenart umfasst, die von einer Pflanzenart, die für die Herstellung von FP-A verwendet wird, verschieden ist, von einer Pflanzenart, die für die Herstellung von FP-B verwendet wird, verschieden ist und von einer Pflanzenart, die für die Herstellung von FP-C verwendet wird, verschieden ist; und
f. eine Portion eines Nahrungsmittelprodukts ist:
(i) 2 bis 50 Gramm trockene Säuglings- bzw. Kleinkindnahrung

2. Teilekit nach Anspruch 1, wobei FP-A, FP-B, FP-C und FP-D zwischen 5 und 60 en% Lipid, zwischen 5 und 40 en% Protein und zwischen 15 und 90 en% Kohlenhydrat umfassen.

3. Nicht-therapeutisches Verfahren zum Ernähren eines Säuglings bzw. Kleinkinds, umfassend die Schritte:
a. Verabreichen einer Portion eines Nahrungsmittelprodukts A (FP-A) an den Säugling bzw. das Kleinkind; gefolgt von
b. Verabreichen einer Portion eines Nahrungsmittelprodukts B (FP-B) an den Säugling bzw. das Kleinkind; gefolgt von
c. Verabreichen einer Portion Nahrungsmittelprodukt C (FP-C) an den Säugling bzw. das Kleinkind; gefolgt von
d. Verabreichen einer Portion Nahrungsmittelprodukt D (FP-D) an den Säugling bzw. das Kleinkind;
wobei FP-A ein Pflanzenmaterial umfasst und FP-B ein Pflanzenmaterial aus einer Pflanzenart umfasst, die von einer Pflanzenart, die für die Herstellung von FP-A verwendet wird, verschieden ist, und wobei FP-C ein Pflanzenmaterial aus einer Pflanzenart umfasst, die von einer Pflanzenart, die für die Herstellung von FP-A verwendet wird, verschieden ist und von einer Pflanzenart, die für die Herstellung von FP-B verwendet wird, verschieden ist, und FP-D ein Pflanzenmaterial aus einer Pflanzenart umfasst, die von einer Pflanzenart, die für die Herstellung von FP-A verwendet wird, verschieden ist und von einer Pflanzenart, die für die Herstellung von FP-B verwendet wird, verschieden ist und von einer Pflanzenart, die für die Herstellung von FP-C verwendet wird, verschieden ist;
und wobei FP-A, FP-B, FP-C und FP-D Säuglings- bzw. Kleinkindnahrung sind.

4. Verfahren nach Anspruch 3, wobei der Säugling bzw. das Kleinkind ein Alter unter 2 Jahren aufweist.

5. Verfahren nach den Ansprüchen 3 oder 4, wobei FP-A, FP-B, FP-C und FP-D zwischen 5 und 60 en% Lipid, zwischen 5 und 40 en% Protein und zwischen 15 und 90 en% Kohlenhydrat umfassen.

6. Verfahren nach einem der Ansprüche 3 - 5, zur sensorischen Prägung von verschiedenen Geschmacksrichtungen.

7. Verfahren nach einem der Ansprüche 3 - 5 zum Stimulieren des Konsums von Pflanzenmaterial wie Gemüsen und Früchten im späteren Leben.

8. Verfahren nach einem der Ansprüche 3 - 5 zum Erhöhen der Gewöhnung an mehrere Pflanzengeschmacksrichtungen.

## Revendications

1. Ensemble d'éléments comprenant de 4 à 100 récipients comprenant un produit alimentaire et au moins un récipient avec une portion du produit alimentaire A (FP-A) et un récipient avec une portion du produit alimentaire B (FP-B) et au moins une portion du produit alimentaire C (FP-C) et au moins un récipient avec une portion du produit alimentaire D (FP-D) dans lequel :
a. FP-A et FP-B et FP-C et FP-D sont sous forme appropriée pour l'administration à un nourrisson après mélange avec un liquide aqueux ;
b. FP-A comprend un matériel végétal ;
c. FP-B comprend un matériel végétal issu d'une espèce végétale autre que l'espèce végétale utilisée pour la fabrication de FP-A ;
d. FP-C comprenant un matériel végétal issu d'une espèce végétale autre que l'espèce végétale utilisée pour la fabrication de FP-A et autre que l'espèce végétale utilisée pour la fabrication de FP-B ;
e. FP-D comprend un matériel végétal issu d'une espèce végétale autre que l'espèce végétale utilisée pour la fabrication de FP-A, autre que l'espèce végétale utilisée pour la fabrication de FP-B et autre que l'espèce végétale utilisée pour la fabrication de FP-C ; et
f. une portion de produit alimentaire est :
(i) de 2 à 50 grammes d'alimentation infantile sèche.

2. Ensemble d'éléments selon la revendication 1, dans lequel FP-A, FP-B, FP-C et FP-D comprennent entre 5 et 60 en% de lipides, entre 5 et 40 en% de protéines et entre 15 et 90 en% de carbohydrate.

3. Procédé non thérapeutique pour alimenter un nourrisson, comprenant les étapes suivantes :
a. administration au nourrisson d'une portion du produit alimentaire A (FP-A) ; suivie de
b. l'administration au nourrisson d'une portion du produit alimentaire B (FP-B) ; suivie de
c. l'administration au nourrisson d'une portion du produit alimentaire C (FP-C) ; suivie de
d. l'administration au nourrisson d'une portion du produit alimentaire D (FP-D) ;
dans lequel FP-A comprend un matériel végétal et FP-B comprend un matériel végétal issu d'une espèce végétale autre que l'espèce végétale utilisée pour la fabrication de FP-A et dans lequel FP-C comprend un matériel végétal issu d'une espèce végétale autre que l'espèce végétale utilisée pour la fabrication de FP-A et autre que l'espèce végétale utilisée pour la fabrication de FP-B et FP-D comprend un matériel végétal issu d'une espèce végétale autre que l'espèce végétale utilisée pour la fabrication de FP-A et autre que l'espèce végétale utilisée pour la fabrication de FP-B et autre que l'espèce végétale utilisée pour la fabrication de FP-C ; et dans lequel FP-A, FP-B, FP-C et FP-D sont des aliments pour nourrissons.

4. Procédé selon la revendication 3, dans lequel le nourrisson a un âge inférieur à 2 ans.

5. Procédé selon les revendications 3 ou 4, dans lequel FP-A, FP-B, FP-C et FP-D comprennent entre 5 et 60 en% de lipides, entre 5 et 40 en% de protéines et entre 15 et 90 en% de carbohydrate.

6. Procédé selon l'une quelconque des revendications 3 à 5, pour l'impression sensorielle des différents goûts.

7. Procédé selon l'une quelconque des revendications 3 à 5 pour stimuler, plus tard dans la vie, la consommation de matériel végétal tel que les légumes et les fruits.

8. Procédé selon l'une quelconque des revendications 3 à 5 pour augmenter la familiarisation avec les goûts de végétaux multiples.
